# EUROPEAN PATENT APPLICATION

(11) **EP 4 595 940 A1**
(43) Date of publication of application: **06.08.2025**
(21) Application number: 23872398.5
(22) Date of filing: 27.09.2023
(51) Int. Cl.: A61H 5/00, G09B 9/00, G06T 19/00

(54) **VISUAL ACUITY TRAINING SYSTEM, VISUAL ACUITY TRAINING METHOD, AND PROGRAM**

(30) Priority: 27.09.2022 JP 2022153376
(71) Applicant: Innojin, Inc., Tokyo 113-0033 (JP); Juntendo Educational Foundation, Tokyo 113-8421 (JP)
(72) Inventor: INOMATA Takenori, Tokyo 113-0033 (JP); OKUMURA Yuichi, Tokyo 113-0033 (JP)
(74) Representative: Hasegawa, Kan
(86) International application number: PCT/JP2023/035092
(87) International publication number: WO 2024/071176

(57) **Abstract**

[Technical Problem] To enable visual function training.

[Solution to Problem] A visual function training system comprising: a first display device configured to display an image to one eye of a user; a second display device configured to display an image to an opposite eye of the user; and a display control unit configured to control an object to be operated by the user, which is displayed on the first and second display devices, to have different transparencies on the first and second display devices.

## Description

### [Technical Field]

This invention relates to a visual function system, a visual function method and program.

### [Background Art]

A visual function method that changes how the right eye and left eye see using a headset has been proposed (see Patent Literature 1).

### [Citation List]

### [Patent Literature]

[PTL1] International Publication No. 2017/181010

### [Summary of Invention]

### [Technical Problem]

However, as in Patent Literature 1, changing the view of the entire space for each eye makes it difficult to concentrate on the work object that should be focused on. Also, changing the contrast, brightness, or darkness of the work object makes the object stand out even more.

This invention has been made in view of this background, with the purpose of providing a technology that can train vision.

### [Solution to Problem]

The principal invention to solve the above problem is a visual function system comprising: a first display device configured to display an image to one eye of a user; a second display device configured to display an image to an opposite eye of the user; and a display control unit configured to control an object to be operated by the user, which is displayed on the first and second display devices, to have different transparencies on the first and second display devices.

Other issues disclosed in this application and their solutions will be clarified in the "Description of Embodiments" section and in the drawings.

### [Advantageous Effects of Invention]

According to this invention, it is possible to train visual function.

### [Brief Description of Drawings]

Fig. 1: A diagram showing an example configuration of the binocular visual function training system according to this embodiment.
Fig. 2: A diagram showing an example configuration of HMD 1.
Fig. 3: A diagram showing an example software configuration of computer 2.
Fig. 4: A diagram showing an example of an image displayed on HMD 1.
Fig. 5: A diagram showing another example of an image displayed on HMD 1.
Fig. 6: A diagram explaining the operation of computer 2 in the binocular visual function training system of this embodiment.

### [Description of Embodiments]

### <Overview>

The following is a description of a binocular visual function training system according to one embodiment of this invention. In this embodiment of the binocular visual function training system, a user wears a head-mounted display (HMD 1) and performs operations in a virtual space. By making the transparency of the object to be operated on different for the right eye and the left eye, training can be provided for users with amblyopia.

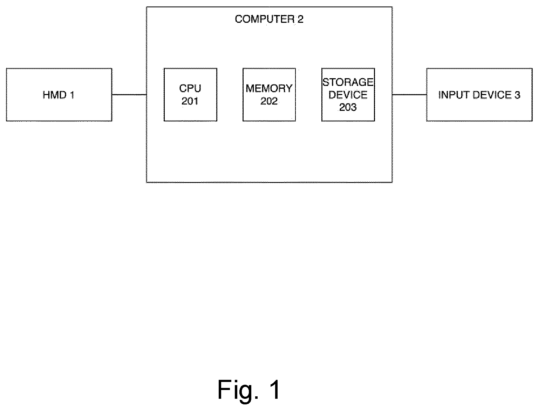

Fig. 1 is a diagram showing an example configuration of the binocular visual function training system according to this embodiment. The binocular visual function training system of this embodiment includes computer 2. The computer 2 is connected to HMD 1 and input device 3, can accept data input from input device 3, and can control the display of images on HMD 1. As shown in Fig. 1, the computer 2 can be equipped with CPU 201, memory 202, and storage device 203. The storage device 203 is, for example, a hard disk drive, solid state drive, or flash memory that stores various data and programs. Each functional part of the computer 2 described below is realized by CPU 201 reading a program stored in storage device 203 into memory 202 and executing it, and each storage part of the computer 2 can be realized as part of the storage area provided by memory 202 and storage device 203.

The input device 3 is, for example, a controller. The input device 3 can support the user in making predetermined inputs in the virtual space. Input device 3 can be configured, for example, as a set of left-hand and right-hand controllers. Input device 3 can be equipped with, for example, operation trigger buttons, infrared LEDs, sensors, joysticks, menu buttons, etc. The input device 3 can also detect posture and movement using an acceleration sensor (not shown) and input posture and movement data to the computer 2 as input data.

The computer 2 can execute control processing to display a virtual object (three-dimensional object) to be operated on in HMD 1, move a virtual hand in response to input from input device 3, and allow the user to perform operations on the operation object through the movement of the virtual hand.

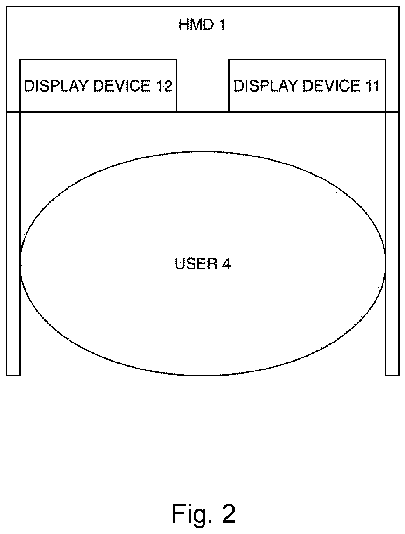

Fig. 2 is a diagram showing an example configuration of HMD 1. HMD 1 can be worn on the user's head. HMD 1 is equipped with display devices 11 and 12 to be placed in front of the user's left and right eyes. Display device 11 displays an image to one eye (the right eye in the example in Fig. 2). Display device 12 displays an image to the other eye (the left eye in the example in Fig. 2). For display devices 11 and 12, for example, optical transmissive and non-transmissive displays can be employed. As described below, the transparency of the object to be operated on displayed on display devices 11 and 12 is controlled to be different.

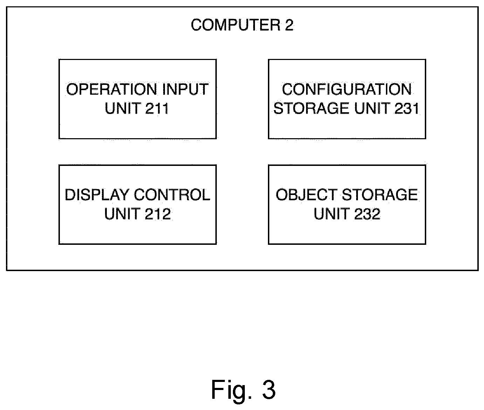

Fig. 3 is a diagram showing an example of the software configuration of the computer 2. The computer 2 can be equipped with an operation input unit 211, a display control unit 212, a setting storage unit 231, and an object storage unit 232.

The setting storage unit 231 can store various setting items. The setting storage unit 231 can store setting items associated with information indicating a user (user ID). The setting items can be set, for example, by the ophthalmologist treating the user. The setting items can include, for example, information indicating the display device 11 or 12 that increases the transparency of the object. The setting items can include, for example, information specifying the user's eye with better or worse visual acuity. In this case, the transparency of the object can be increased on display device 11 or 12 corresponding to the eye with better visual acuity, and the user can be trained to see the operation object more with the eye with worse visual acuity. The setting items can include, for example, the transparency of the object. The setting items can store a difficulty level set for the user. For example, if there are multiple objects to be operated on, the setting items can include information indicating the object to be viewed with more concentration.

The object storage unit 232 can store information for displaying virtual objects (hereinafter referred to as "object information"; for example, it can be a 3D model).

The operation input unit 211 can accept input from the input device 3. For example, the operation input unit 211 can accept information (event information) from the input device 3 indicating operations such as posture, movement, button presses, etc. of the input device 3.

The display control unit 212 displays images on display devices 11 and 12. The display control unit 212 can display virtual objects in the virtual space based on object information stored in the object storage unit 232. The display control unit 212 can refer to the setting storage unit 231 to determine which display devices 11 or 12 should increase the transparency of the object and how transparent the object should be. The display control unit 212 can also determine which object's transparency to increase in which display device 11 or 12 when there are multiple objects to be operated on.

In this embodiment, the display control unit 212 controls the object to be operated by the user that is displayed on display devices 11 and 12 to have different transparencies on the first and second display devices. The display control unit 212 can display various objects in a virtual space pertaining to VR (Virtual Reality). In this embodiment, the display control unit 212 can display three-dimensional objects on display devices 11 and 12 so that a three-dimensional image is formed using parallax. The display control unit 212 can display objects on display devices 11 and 12 so that the objects are displayed in three dimensions to the user and with different transparencies on display devices 11 and 12.

The display control unit 212 may also displace virtual objects in augmented reality (AR; Augmented Reality) space or mixed reality (MR; Mixed Reality) space. For example, HMD 1 may be equipped with a camera, and the display control unit 212 may display the image captured by HMD 1 and superimpose a virtual object on the image from the camera so that the object to be operated is displayed in three dimensions.

The display control unit 212 can also detect an object from the image captured by a camera (not shown; HMD 1 may be equipped with it, or the computer 2 may be equipped with it) and change the transparency of the detected object. In this case, HMD 1 or the computer 2 can be equipped with first and second cameras that capture the user's field of view, and the computer 2 can be equipped with an image acquisition unit that acquires the first and second images captured by the first and second cameras. The display control unit 212 can detect objects in the first and second images and perform image processing to increase the transparency of regions of the object in the first or second image. For example, the display control unit 212 can detect the user's gaze point, recognize the object at the position of the gaze point among the objects detected from the first and second images as the object to be operated, and change the transparency of the area occupied by the recognized object.

The display control unit 212 can control to increase the transparency of the object displayed on display device 11 or 12 that is placed in front of the eye with the lower degree of amblyopia (better visual acuity). This makes it easier for the user to use the eye with worse visual acuity and train the user to use the eye with worse visual acuity more.

The display control unit 212 may control the transparency of only one of the objects displayed on display device 11 or 12 to increase over time. For example, the transparency can be changed during operation on the object by the user.

The transparency can be changed according to the degree of treatment. When used for amblyopia treatment, the transparency can be changed according to the degree of amblyopia. The transparency can be changed according to the difficulty level set for the user. That is, if a higher difficulty level is set, the transparency can be set to be higher. The difficulty level can be set by inquiring about the user's subjective feeling of difficulty for the training through a questionnaire or other means, and if the user feels the difficulty level is higher than a predetermined difficulty level, the transparency can be lowered, and if the user feels the difficulty level is lower than the predetermined difficulty level, the transparency can be increased. The predetermined difficulty level and transparency settings may be set by an ophthalmologist.

The transparency can be set to 100% (completely invisible). In other words, an object can be displayed to one eye while not being displayed to the other eye.

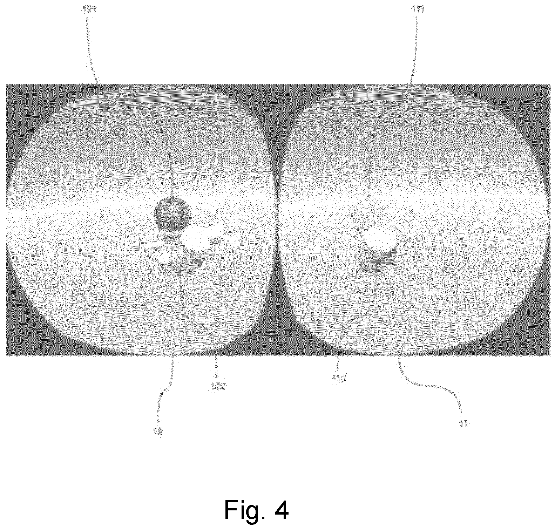

Fig. 4 is a diagram showing an example of an image displayed on HMD 1. In the example in Fig. 4, a Kendama is displayed as the object to be operated, and it is assumed that the left eye has worse visual acuity than the right eye. In the example of Fig. 4, the object image 111 displayed to the right eye of the Kendama has higher transparency than the object image 121 displayed to the left eye. The display control unit 212 can, for example, control the transparency of the object displayed to one eye (the right eye in the example in Fig. 4) to increase while the user is playing Kendama in the virtual space using hands displayed by the hand images 112 and 112.

In this way, it becomes possible to train the user to perform binocular vision successfully by having the eye hand coordination, not only by viewing images but also by performing actual operations. It is also possible to increase concentration on treatment or improve motivation for treatment, which is expected to enhance treatment effectiveness. In addition, by having the user operate the operation object in the virtual space and by changing how objects appear to both eyes, it is also possible to train stereoscopic visual function.

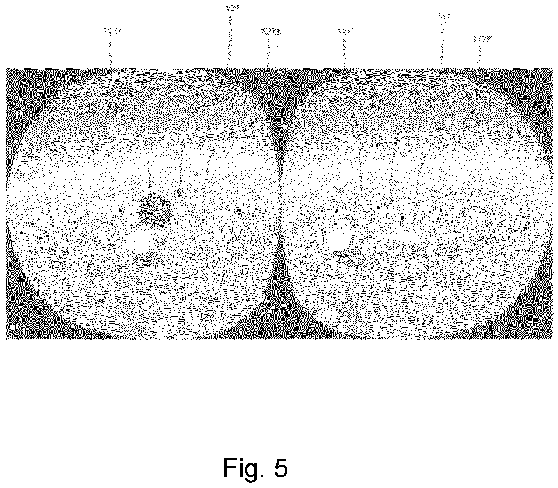

Fig. 5 is a diagram showing another example of an image displayed on HMD 1. When there are multiple objects to be operated on and it is common to view the first object more intensively than the second object, for one eye (the eye with a stronger degree of amblyopia, worse visual acuity, more difficulty seeing, or the eye being trained), the transparency of the first object can be kept unchanged (or lowered) while the transparency of the second object is increased, and for the other eye (the eye with a weaker degree of amblyopia, not subject to training), the transparency of the first object can be increased while the transparency of the second object remains unchanged (or is lowered). For example, Fig. 5 shows a case where the left eye has worse visual acuity, and the transparency of the ball 1111 of the Kendama 111 in the right eye is increased while the transparency of the Ken 1112 is not increased, whereas the transparency of the ball 1211 of the Kendama 121 in the left eye is not increased while the transparency of the Ken 1212 is increased.

### <Operation>

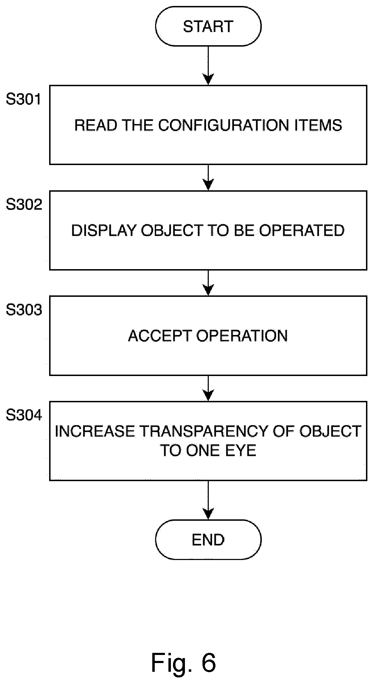

Fig. 6 is a diagram explaining the operation of the computer 2 in this embodiment's binocular visual function training system.

The computer 2 reads the setting items corresponding to the user stored in the setting storage unit 231 (S301), displays images on display devices 11 and 12 so that the object to be operated is displayed three-dimensionally in the virtual space based on the object information stored in the object storage unit 232 (S302), and accepts instructions for operating the object in response to input from the input device 3 (S303) and performs operations on the object, for example, by manipulating a virtual hand. The computer 2 increases the transparency of the object to be operated on either display device 11 or 12 according to the setting items (S304).

The above description of this embodiment is intended to facilitate understanding of the invention and is not intended to limit the interpretation of the invention. The invention may be changed and improved without departing from its spirit, and the invention also includes equivalents thereof.

For example, the computer 2 may be equipped with an alert output unit that outputs alerts. The alert output unit can, for example, output alerts for forgotten training. For example, the alert output unit can record the date and time when amblyopia training is processed by the operation input unit 211 and the display control unit 212 in the storage device 203, and if a predetermined amount of time has elapsed since the recorded date and time, it can output an alert indicating that training has not been performed.

The alert output unit may be provided by a server device (not shown) that is communicatively connected to the computer 2. In this case, the operation input unit 211 can transmit the date and time of the amblyopia training to the server device, and the server device can be equipped with a training date and time storage unit that stores the date and time of the amblyopia training in association with information identifying the computer 2 or the user. The server device can also send an alert indicating that the training has not been performed to the computer 2 or user after a predetermined time has elapsed from the date and time stored in the training date and time storage unit.

The alert output unit can also send alerts to other users in addition to or instead of the user conducting the training. For example, the alert output unit can send alerts to the user's guardian, the user's supervisor, the ophthalmologist examining the user, etc.

The computer 2 can be equipped with a history storage unit that stores a history including the date and time of amblyopia training and a schedule storage unit that stores a schedule of training. The training schedule can include, for example, the number of sessions and/or duration of training in a predetermined period (e.g., one week, one month, etc.). The training schedule can also include, for example, the dates when training is scheduled to take place. The alert output unit can compare the training schedule stored in the schedule storage unit with the training history stored in the history storage unit to determine the degree to which the schedule is being followed (degree of compliance) and send the degree of compliance to the user or ophthalmologist via e-mail or chat. The degree of compliance can be calculated, for example, by totaling the number of training sessions and/or the time spent within a predetermined period from the training history and calculating the difference or ratio compared to the number of sessions and/or time set in the schedule. The degree of compliance can also be calculated by determining whether or not training was conducted based on whether or not history corresponding to the dates set in the schedule (which may include a predetermined number of days before or after) is stored in the history storage unit, for example, by dividing the number of days on which training was conducted by the number of scheduled days.

The computer 2 can also be equipped with a reward granting unit that provides rewards to users who have performed training. By providing rewards, the user's adherence can be improved.

The reward granting unit can provide, for example, monetary value (monetary reward) as a reward. The reward granting unit can, for example, issue points that can be used to purchase items.

The reward granting unit can provide, for example, something that has meaning within the user's own mind (inner reward), regardless of monetary value, as a reward. The reward granting unit can, for example, adjust the difficulty level to provide a sense of accomplishment. The reward granting unit can, for example, display content that is only displayed to users who have completed a given task when they complete that task.

The reward granting unit can provide, for example, something that can gain approval from other users (social reward) as a reward. In this case, the reward granting unit gives a score to the user when the user completes a game using an object with modified transparency (in the example above, a technique using a Kendama).

The computer 2 is communicatively connected to a server device (not shown), and the reward granting unit can transmit the score given to the user to the server device. The server device can be equipped with a score storage unit that records the user's score for each user. The score storage unit can aggregate (typically totaling, but other methods can be used) scores for each predetermined period (which can be periods of any length, such as an hour, a day, a week, a year, etc.), rank users according to the aggregated score, and transmit the ranking to the computer 2 and/or the user's terminal (e.g., smartphone, etc.). The ranking can include information that identifies the user, such as a nickname, and the aggregated score during the period (which may be the entire period), sorted in order of the aggregated score, and only including a predetermined number of top users (e.g., 10).

This type of ranking can increase the motivation of users for amblyopia treatment and improve adherence.

The reward granting unit can, for example, grant rewards according to the score (in an amount corresponding to the score or with content that varies according to the score).

The reward granting unit can, for example, grant rewards according to the number of times the program for amblyopia training is activated (implementing the operation input unit 211 and display control unit 212) using the computer 2 (in an amount corresponding to the score or with content that varies according to the score).

The reward granting unit can grant rewards in response to instructions from an ophthalmologist. In this case, the reward granting unit can store a reward that is scheduled to be granted in the storage unit in a way that the user cannot use it, and can grant the stored reward in a way that the user can use it when the ophthalmologist's instruction is received.

### <Disclosure>

The disclosure also includes the following configurations.

### [Item 1]

A visual function training system comprising:
a first display device configured to display an image to one eye of a user;
a second display device configured to display an image to an opposite eye of the user; and
a display control unit configured to control an object to be operated by the user, which is displayed on the first and second display devices, to have different transparencies on the first and second display devices.

### [Item 2]

The visual function training system according to Item 1, wherein:
the object is a virtual object; and
the display control unit displays the object on the first and second display devices so that the object is displayed in three dimensions to the user and with different transparencies on the first and second display devices.

### [Item 3]

The visual function training system according to Item 1, further comprising:
a configuration information storage unit that stores information indicating which of the user's eyes has higher visual acuity;
wherein the display control unit controls to increase the transparency of the object displayed on the first or second display device that displays the image to the eye indicated by the information stored in the configuration information storage unit.

### [Item 4]

The visual function training system according to Item 1, further comprising:
first and second cameras that capture the user's field of vision; and an image acquisition unit that acquires first and second images captured by the first and second cameras;
wherein the display control unit detects the object from the first and second images and increases the transparency of a region of the object in the first or second image.

### [Item 5]

A visual function training method comprising:
a computer executing a step of controlling an object to be operated by a user, which is displayed on a first display device that displays an image to one eye of the user and on a second display device that displays an image to an opposite eye of the user, to have different transparencies on the first and second display devices.

### [Item 6]

A program for causing a computer to execute a step of controlling an object to be operated by a user, which is displayed on a first display device that displays an image to one eye of the user and on a second display device that displays an image to an opposite eye of the user, to have different transparencies on the first and second display devices.

### [Reference Signs List]

- 1: HMD
- 2: Computer
- 3: Input device

## Claims

1. A visual function training system comprising:
a first display device configured to display an image to one eye of a user;
a second display device configured to display an image to an opposite eye of the user; and
a display control unit configured to control an object to be operated by the user, which is displayed on the first and second display devices, to have different transparencies on the first and second display devices.

2. The visual function training system according to claim 1, wherein:
the object is a virtual object; and
the display control unit displays the object on the first and second display devices so that the object is displayed in three dimensions to the user and with different transparencies on the first and second display devices.

3. The visual function training system according to claim 1, further comprises:
a configuration information storage unit that stores information indicating which of the user's eyes has higher visual acuity;
wherein the display control unit controls to increase the transparency of the object displayed on the first or second display device that displays the image to the eye indicated by the information stored in the configuration information storage unit.

4. The visual function training system according to claim 1, further comprises:
first and second cameras that capture the user's field of vision; and
an image acquisition unit that acquires first and second images captured by the first and second cameras;
wherein the display control unit detects the object from the first and second images and increases the transparency of a region of the object in the first or second image.

5. A visual function training method comprising:
a computer executing a step of controlling an object to be operated by a user, which is displayed on a first display device that displays an image to one eye of the user and on a second display device that displays an image to an opposite eye of the user, to have different transparencies on the first and second display devices.

6. A program for causing a computer to execute a step of controlling an object to be operated by a user, which is displayed on a first display device that displays an image to one eye of the user and on a second display device that displays an image to an opposite eye of the user, to have different transparencies on the first and second display devices.
